# EUROPEAN PATENT APPLICATION

(11) **EP 4 752 014 A1**
(43) Date of publication of application: **03.06.2026**
(21) Application number: 25194229.8
(22) Date of filing: 06.08.2025
(51) Int. Cl.: B60T 11/10, B62K 5/08

(54) **A VEHICLE**

(30) Priority: 29.11.2024 CN 202422943594 U
(71) Applicant: 3KM Pte. Ltd, Singapore 199591 (SG)
(72) Inventor: WANG, Xiajun, 199591 SINGAPORE (SG); WANG, Dabo, 199591 SINGAPORE (SG)
(74) Representative: Santarelli

(57) **Abstract**

This application provides a vehicle (001). The vehicle includes a main body (100), a brake component (assembly 200) and a detection component (assembly 300). The main body is provided with at least one wheel (111, 112). The brake component is arranged on the main body. The brake component includes a braking mechanism (210), a transmission mechanism (230) and a brake lever (250). The braking mechanism is configured to limit rotation of at least one wheel. The brake lever is connected to the braking mechanism through a transmission mechanism, so as to drive the braking mechanism to move through the transmission mechanism, so that the braking mechanism restricts the rotation of at least one wheel. The detection component (300) is arranged on the main body and is configured to change state when the transmission mechanism fails. The vehicle provided in this manual can detect the failure of the transmission mechanism through the detection component when the transmission mechanism fails, so that the failure of the transmission mechanism can be discovered in time, allowing the user or the vehicle to take active countermeasures.

## Description

### Technical Field

This specification relates to the technical field of vehicles, particularly to a vehicle.

### Background of the Invention

With the development of technology, various types of vehicles have appeared in people's lives, bringing great convenience to daily living. In particular, the use of short-distance transportation vehicles is increasing, such as scooters, self-balanced vehicles, and so on. These vehicles are compact and lightweight, suitable for maneuvering in narrow spaces, and are highly advantageous for ultra-short trips. A vehicle may include a braking assembly, allowing the user to control the vehicle's brakes through the braking system. However, the braking assembly is at risk of damage, which could lead to brake failure.

In existing vehicles, when the braking assembly is damaged, it is difficult for a user to detect the issue in time, which increases the likelihood of driving accidents.

Therefore, there is a need to provide a vehicle that allows a user to easily detect damage to the braking assembly when it occurs.

The content of the background technology section represents information known to the inventor personally and does not indicate that the information was in the public domain before the filing date of this disclosure, nor does it imply that it constitutes prior art for this disclosure.

### Summary of the Invention

This specification provides a vehicle that can solve the problems existing in related technologies.

In a first aspect, the application provides a vehicle, which includes a main body, a braking assembly, and a detection assembly. The main body is provided with at least one wheel. The braking assembly is disposed on the main body and includes a braking mechanism, a transmission mechanism, and a brake lever. The braking mechanism is configured to restrict the rotation of the at least one wheel. The brake lever is connected to the braking mechanism via the transmission mechanism, so that the braking mechanism is driven by the transmission mechanism to move and restrict the rotation of the at least one wheel. The detection assembly is disposed on the main body and is configured to undergo a state change when the transmission mechanism fails.

In some embodiments, the transmission mechanism includes at least one of a brake cable or a hydraulic pipe. The detection assembly includes a wire that measures the conductive state of the wire during operation, where the wire is configured to be adjacent to the transmission mechanism and extends along the extension direction of the transmission mechanism. When the transmission mechanism fails due to a break, the wire also breaks, allowing the detection assembly to detect the failure of the transmission mechanism based on a change in the conductive state of the wire.

In some embodiments, the at least one wheel includes a first wheel and a second wheel. The braking mechanism includes a first sub-braking mechanism and a second sub-braking mechanism, where the first sub-braking mechanism is configured to restrict the rotation of the first wheel, and the second sub-braking mechanism is configured to restrict the rotation of the second wheel. The brake cable includes a main brake cable, a first sub-brake cable, and a second sub-brake cable. The main brake cable is connected to the first sub-braking mechanism through the first sub-brake cable and to the second sub-braking mechanism through the second sub-brake cable. The wire includes a main wire, a first sub-wire, and a second sub-wire. The main wire is connected to the first sub-wire and the second sub-wire. The first sub-wire is positioned adjacent to the first sub-brake cable and extends along the extension direction of the first sub-brake cable. The second sub-wire is positioned adjacent to the second sub-brake cable and extends along the extension direction of the second sub-brake cable.

In some embodiments, the at least one wheel includes a first wheel and a second wheel. The braking mechanism includes a first sub-braking mechanism and a second sub-braking mechanism, where the first sub-braking mechanism is configured to restrict the rotation of the first wheel, and the second sub-braking mechanism is configured to restrict the rotation of the second wheel. The hydraulic pipe includes a main pipe, a first sub-pipe, and a second sub-pipe. The main pipe is connected to the first sub-braking mechanism through the first sub-pipe, and the main pipe is connected to the second sub-braking mechanism through the second sub-pipe. The wire includes a main wire, a first sub-wire, and a second sub-wire. The main wire is connected to the first sub-wire and the second sub-wire. The first sub-wire is positioned adjacent to the first sub-pipe and extends along the extension direction of the first sub-pipe. The second sub-wire is positioned adjacent to the second sub-pipe and extends along the extension direction of the second sub-pipe.

In some embodiments, the first wheel and the second wheel are both front wheels; or the first wheel and the second wheel are both rear wheels.

In some embodiments, the braking assembly includes a movable part, which is connected to the transmission mechanism and undergoes a positional change when the transmission mechanism fails. The detection assembly includes a position sensor, which is configured to detect the positional change of the movable part.

In some embodiments, the main body includes a base. The movable part is movably connected to the base. The transmission mechanism includes a brake cable or a hydraulic pipe, where the movable part is connected to the brake cable or hydraulic pipe and can move relative to the base as driven by a fluid in the brake cable or hydraulic pipe. The position sensor is disposed on the base and is configured to detect the positional change of the movable part relative to the base.

In some embodiments, the braking assembly includes a load part, which is connected to the transmission mechanism, and undergoes a load change when the transmission mechanism fails. The detection assembly includes a pressure sensor, which is configured to detect the load change of the load part.

In some embodiments, the transmission mechanism includes a brake cable, wherein the load part is located on the brake cable. The pressure sensor is connected to the brake cable.

In some embodiments, the transmission mechanism includes a brake cable. The braking mechanism includes a movable part, which is connected to the brake cable and moves relative to at least one wheel under the influence of the brake cable, thereby restricting the rotation of the at least one wheel. The load part is located on the movable part, and the pressure sensor is connected to the movable part.

In some embodiments, the transmission mechanism is a hydraulic transmission structure, and the hydraulic transmission structure forms a receiving space for containing fluid. The load part is located on a surrounding wall of the receiving space, and the pressure sensor is configured to detect changes in the load applied by the fluid inside the receiving space to the surrounding wall of the receiving space.

In some embodiments, the detection assembly includes a controller; the vehicle includes a response component. The response component is disposed on the main body and electrically connected to the controller. The controller is configured to: when the detection assembly undergoes a state change, control the response component to issue a prompt message and/or perform a responsive action.

In summary, the vehicle provided in this specification can detect the failure of the transmission mechanism through the detection assembly when the transmission mechanism fails, allowing the failure to be promptly identified and enabling the user or vehicle to take proactive measures.

Other functions of the vehicle provided in this specification will be partially listed in the following description. Based on the description, the content introduced by the following numbers and examples will be evident to a person skilled in the art. The inventive aspects of the vehicle provided in this specification can be fully understood based on the methods, devices, and combinations thereof provided in the detailed examples below.

### Brief Description of the Drawings

In order to more clearly illustrate the technical solutions of the embodiments of this specification, the following is a brief introduction to the drawings that are needed in the description of the embodiments. It is evident that the drawings described below are merely some embodiments of this specification, and for a person skilled in the art, other drawings can be derived from these without requiring inventive efforts.
FIG. 1 is a perspective schematic view of a vehicle provided in some embodiments of this application;
FIG. 2 is a partial front view schematic of a vehicle provided in some embodiments of this application;
FIG. 3 is a partial front view schematic of a vehicle provided in some embodiments of this application;
FIG. 4 is a schematic block diagram of a circuit structure of a detection assembly provided in some embodiments of this application;
FIG. 5 is a partial schematic side view of a vehicle provided in some embodiments of this application;
FIG. 6 is a diagram showing a positional change of a movable part of a braking assembly when a transmission mechanism undergoes a state change, as provided in some embodiments of this application; and
FIG. 7 is a schematic view of a pressure sensor measuring a hydraulic pressure inside a hydraulic pipe, as provided in some embodiments of this application.

### Detailed Description of Embodiments

The following description provides specific application scenarios and requirements of this specification, with the aim of enabling a person skilled in the art to manufacture and use the content described herein. Various modifications to the disclosed embodiments are apparent to a person skilled in the art, and the general principles defined herein can be applied to other embodiments and applications without departing from the spirit and scope of this specification. Therefore, this specification is not limited to the embodiments shown, but rather encompasses the broadest scope consistent with the claims.

The terms used here are for the purpose of describing specific exemplary embodiments and are not meant to be limiting. For instance, unless the context clearly indicates otherwise, the singular forms "a," "an," and "the" may also include the plural forms. When used in this specification, the terms "comprising," "including," and/or "containing" mean that the associated feature, integer, step, operation, element, and/or component is present, but do not exclude the presence of one or more other features, integers, steps, operations, elements, components, and/or groups, or the addition of other features, integers, steps, operations, elements, components, and/or groups to the system/method.

Considering the following description, the features of this specification, along with other features, the operation and functionality of related components, and the economic feasibility of combining and manufacturing parts, can be significantly improved. The drawings referenced herein form a part of this specification. However, it should be clearly understood that the drawings are for illustrative and descriptive purposes only and are not intended to limit the scope of this specification. Additionally, it should be understood that the drawings are not necessarily drawn to scale.

The flowcharts used in this specification illustrate the operation of a system implemented according to some embodiments of this specification. It should be clearly understood that the operations in the flowcharts may not be executed in sequence. Instead, the operations can be performed in reverse order or concurrently. Furthermore, one or more additional operations may be added to the flowchart, and one or more operations may be removed from it.

In this specification, the phrase "X includes at least one of A, B, or C" means that X includes at least A, or X includes at least B, or X includes at least C. In other words, X can include any one of A, B, or C, or any combination of A, B, and C, as well as other possible contents/elements. The combinations of A, B, and C can be A, B, C, AB, AC, BC, or ABC.

In this specification, unless explicitly stated otherwise, the relationship between structures can be either direct or indirect. For example, when describing "A is connected to B," unless it is explicitly stated that A is directly connected to B, it should be understood that A can be either directly or indirectly connected to B. Similarly, when describing "A is above B," unless it is explicitly stated that A is directly above B (i.e., A is adjacent to B and positioned above it), it should be understood that A can be directly above B, or A can be indirectly above B (i.e., there are other elements between A and B, but A is still above B). This logic applies similarly to other descriptions.

With the advancement of technology, various types of vehicles have appeared in people's lives, bringing great convenience. Vehicles may include brake components, allowing users to control the vehicle's braking system. However, brake components are prone to damage, which can lead to brake failure. In current vehicles, it is difficult for users to detect when the brake components are damaged, increasing the probability of accidents. Therefore, there is a need to provide a vehicle that allows users to promptly detect brake component failure when it occurs.

In view of the foregoing, some embodiments of this specification provide a vehicle that can detect the failure of the transmission mechanism through a detection assembly when the transmission mechanism fails. This allows the failure of the transmission mechanism to be detected in a timely manner, enabling users or the vehicle to take proactive measures.

The following provides a detailed description of the technical solutions of some embodiments of this specification, in conjunction with the accompanying drawings.

Vehicles can include both long-distance vehicles and short-distance transportation vehicles. In this specification, long-distance vehicles refer to automobiles, while short-distance transportation vehicles refer to various devices and tools used to meet an individual's transportation needs over relatively short distances. Examples of short-distance vehicles include scooters, self-balanced vehicles, etc. These types of vehicles typically offer portability, ease of operation, and environmental friendliness, making them suitable for short-distance travel within urban areas or specific regions. They can effectively replace or supplement traditional modes of transportation, reducing traffic congestion and environmental pollution.

This specification uses a scooter as an example to describe the aforementioned vehicles. However, a person skilled in the art will understand that other types of short-distance transportation vehicles are also applicable to the invention described in this specification without departing from its spirit.

The scooter provided by this specification can be a short-distance transportation scooter, which allows for standing riding and is compact and lightweight, making it suitable for navigating narrow spaces and highly advantageous for ultra-short-distance travel. In particular, the scooter has a small size in the width direction. The width direction of the scooter can refer to the direction along the axle of the wheels. This makes the scooter compact and lightweight, making it highly suitable for short-distance travel. The scooter may include a three-wheeled scooter, a two-wheeled scooter, etc.

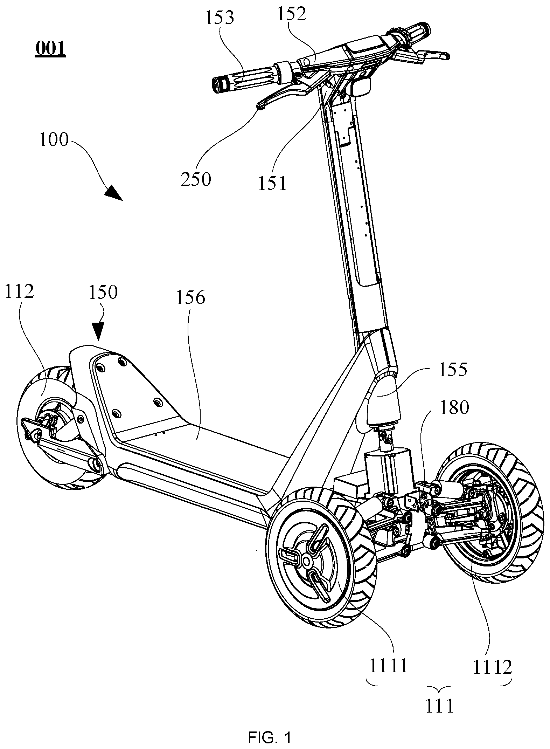

FIG. 1 shows a perspective view of a vehicle according to some embodiments of the present application. As shown in Fig. 1, the vehicle 001 may include a main body 100. The main body 100 is the main structure of the vehicle 001 and is responsible for performing the driving and passenger-carrying functions of the vehicle 001. The main body 100 may include a frame (vehicle body, or body) 150, at least one wheel 111, 112, and a suspension system 180.

The frame 150 can serve as the base of the main body 100. The frame 150 can be used to connect various components of the vehicle 001, such as the wheels, suspension system 180, and so on. The frame 150 can also support the rider. The structure of the frame 150 can vary to suit different application scenarios. For example, when the vehicle 001 is a self-balanced scooter, tricycle, or skateboard/scooter, the frame 150 of the self-balanced scooter, tricycle, and skateboard/scooter may have different designs. In FIG. 1 of this specification, a three-wheeled scooter is used as an example. A person skilled in the art should understand that other structures of the frame 150 are also within the scope of this specification. The material of the frame 150 can be made of metal materials such as carbon steel, aluminum alloy, titanium alloy, and so on. It can also be made of carbon fiber materials. The material of the frame 150 can also be a combination of various materials, and the specification does not limit this.

The frame 150 can also include a support part 156, which is used to support a rider/driver. As shown in FIG. 1, the support part 156 in the frame 150 can be used to support the rider's feet. The rider can stand on the frame 150 to operate the vehicle 001. In some embodiments, the frame 150 can also include a seat, allowing the rider to sit while operating the vehicle 001. In some embodiments, the frame 150 can also include a storage part, used to store items. Additionally, in some embodiments, the frame 150 can include other components, and the specification does not limit this.

The at least one wheel can serve as the vehicle 001's driving part. Each of the wheels can be rotatably connected to the frame 150 to enable the movement of vehicle 001. The tires of the wheels can be inflatable tires or solid rubber tires, and this specification does not limit the type of tire. The wheels may include a metal skeleton inside, which provides support for the tires.

Furthermore, the main body 100 can include a drive motor mounted on the frame. The at least one wheel includes a drive wheel, which is driven by the drive motor to rotate, thus propelling the vehicle 001 forward.

In some embodiments, as shown in FIG. 1, the at least one wheel can include a first wheel 1111 and a second wheel 1112, such as in a self-balanced scooter. The first wheel 1111 and the second wheel 1112 can be positioned on either side of the frame 150, allowing the frame 150 to stand without the need for a kickstand. Furthermore, the first wheel 1111 and the second wheel 1112 can be symmetrically arranged on both sides of the frame 150.

In some embodiments, the vehicle 001 may also include additional wheels, distributed along the longitudinal direction of the frame 150 in relation to the first wheel 1111 and the second wheel 1112. The longitudinal direction can refer to the driving direction of the frame 150.

In some embodiments, as shown in FIG. 1, the at least one wheel can include a front wheel 111 and a rear wheel 112. The front wheel 111 and the rear wheel 112 can be arranged along the longitudinal direction of the frame 150. The longitudinal direction can refer to the driving direction of the frame 150. At least one of the front wheel 111 and rear wheel 112 can be driven to rotate relative to the frame 150, thereby driving the scooter forward. The front wheel 111 and rear wheel 112 can each be connected to the frame 150 to enable the frame to move. In some embodiments, the above-mentioned first wheel 1111 and second wheel 1112 can serve as the front wheels 111 of vehicle 001. In this case, the rear wheel 112 can be one or two in number, and they can be symmetrically distributed on both sides of the frame 150. In other embodiments, the first wheel 1111 and second wheel 1112 can serve as the rear wheels 112 of vehicle 001. In this case, the number of front wheels 111 can be one or two, and they can be symmetrically distributed on both sides of the frame 150. For convenience of description, this application will describe the first wheel 1111 and second wheel 1112 as the front wheels 111 of vehicle 001. However, a person skilled in the art should understand that the first wheel 1111 and second wheel 1112 may also serve as the rear wheels 112 of vehicle 001 and are within the scope of this disclosure.

In some embodiments, as shown in FIG. 1, the main body 100 includes a steering column 151 and a handlebar 152. The handlebar 152 is fixedly connected to the steering column 151, and the frame 150 is rotatably connected to the steering column 151. The front wheel 111 is rotatably connected to the steering column 151, which in turn is rotatably connected to the frame 150 via the steering column 151. Additionally, the frame 150 is pivotably connected to the steering column 151, allowing for steering control of the vehicle.

In some embodiments, one end of the handlebar 152 includes a handle grip 153. In other embodiments, both ends of the handlebar 152 may each include a handle grip 153. The handle grip 153 is designed for the user to hold onto. When the vehicle 001 needs to be steered, the user can rotate the handlebar 152 relative to the frame 150 by gripping the handle grips 153. This, in turn, rotates the steering column 151 and the front wheel 111 relative to the frame 150, allowing the user to steer the vehicle 001.

In some embodiments, as shown in FIG. 1, the main body 100 includes a front fork tube 155, which is fixedly mounted to the frame 150. The steering column 151 is rotatably connected to the front fork tube 155, allowing the steering column 151 to be rotatably connected to the frame 150. The front wheel 111 is rotatably connected to the frame 150 via the steering column 151 and the front fork tube 155.

In other embodiments, the handlebar 152 of the main body 100 can be replaced with a steering wheel.

As shown in FIG. 1, the suspension system 180 can be used to connect at least one wheel of the vehicle 001 to the frame 150. In other words, at least one wheel can be connected to the frame 150 by the suspension system 180. The suspension system 180 refers to all force-transmitting connection devices between the frame 150 and the wheels. Its function is to transmit forces and torques acting between the frame 150 and the wheels. The suspension system 180 can also buffer the shock forces transmitted from uneven road surfaces to the frame 150, reducing vibrations caused by these forces, thereby ensuring the vehicle 001 can travel smoothly.

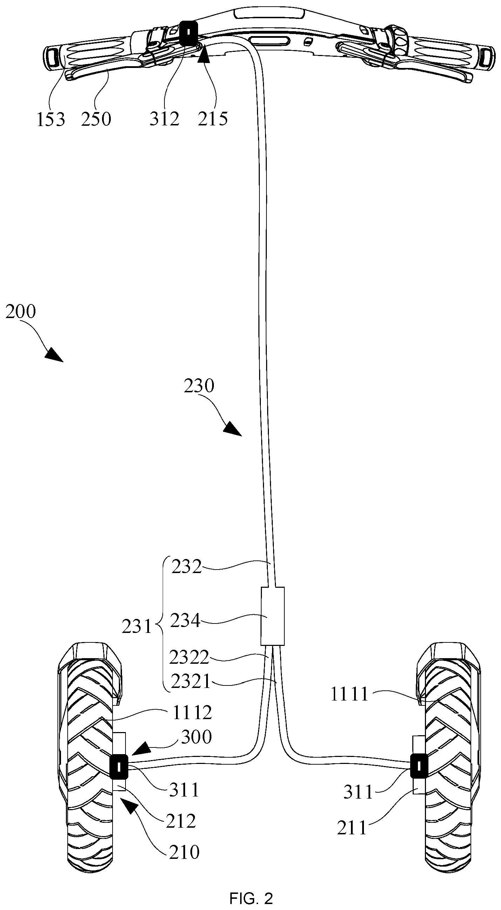

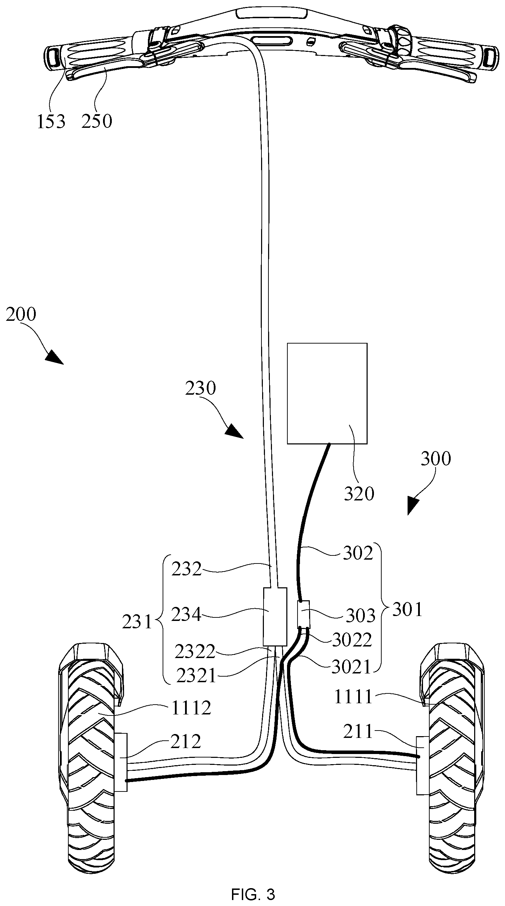

FIG. 2 shows a schematic partial front structure of a vehicle according to some embodiments of the present application. FIG. 3 shows a schematic partial front structure of a vehicle according to some embodiments of the present application. As shown in FIG. 1 to 3, the vehicle 001 further includes a brake assembly 200. The brake assembly 200 is arranged on the main body 100 and at least includes a braking mechanism 210, a transmission mechanism 230, and a brake lever 250.

The braking mechanism 210 is configured to limit the rotation of at least one wheel. The braking mechanism 210 can be arranged at the hub of at least one wheel and limit the wheel's rotation by generating friction. For example, the braking mechanism 210 includes a disc brake structure or a drum brake structure.

The braking mechanism 210 may include at least one sub-braking mechanism. The number of these sub-braking mechanisms may correspond to the number of wheels. For example, the number of sub-braking mechanisms is 2 or 3, matching the number of wheels. Furthermore, each sub-braking mechanism includes either a disc brake structure or a drum brake structure, thus enabling the limitation of the corresponding wheel's rotation.

In some embodiments, as shown in FIG. 2 and 3, the at least one sub-braking mechanism includes a first sub-braking mechanism 211 and a second sub-braking mechanism 212. The first sub-braking mechanism 211 is configured to limit the rotation of the first wheel 1111, and the second sub-braking mechanism 212 is configured to limit the rotation of the second wheel 1112.

Furthermore, the at least one of the sub-braking mechanisms may include a third sub-braking mechanism 210; the at least one wheel may include a third wheel, and the third sub-braking mechanism 210 is configured to restrict the rotation of the third wheel. In some embodiments, as shown in FIG. 1, the first wheel 1111 and the second wheel 1112 are front wheels 111, and the third wheel is a rear wheel 112. In other embodiments, the first wheel 1111 and the second wheel 1112 are rear wheels 112, and the third wheel is a front wheel 111.

As shown in FIG. 2 and 3, the brake lever 250 is connected to the braking mechanism 210 via a transmission mechanism 230. This configuration allows the transmission mechanism 230 to drive the braking mechanism 210, thereby enabling the braking mechanism 210 to restrict the rotation of at least one wheel. When the user manually presses the brake lever 250, it can operate the braking mechanism 210 via the transmission mechanism 230, controlling the vehicle 001 in motion to decelerate and stop.

In some embodiments, the vehicle 100 can be braked using a brake cable 231. Accordingly, the transmission mechanism 230 includes a brake cable 231. When the user manually presses the brake lever 250, it can drive the braking mechanism 210 via the brake cable 231, thereby controlling the moving vehicle 001 to decelerate and stop.

The number of brake cables 231 can be one or more. For example, in some embodiments, the number of brake cables 231 is one. A single brake cable 231 connects to one sub-braking mechanism to restrict the rotation of one wheel. As another example, in some embodiments, the number of brake cables 231 is one, but the single brake cable 231 connects to two sub-braking mechanisms to restrict the rotation of two wheels. In yet another example, in some embodiments, the number of brake cables 231 is two. One brake cable 231 connects to a single sub-braking mechanism to restrict the rotation of one wheel, while the other brake cable 231 connects to two sub-braking mechanisms to restrict the rotation of two wheels.

In some embodiments, as shown in FIG. 2 and 3, the at least one of the brake cables 231 includes a main brake cable 232, a first sub-brake cable 2321, and a second sub-brake cable 2322. The main brake cable 232 is operatively connected to the first sub-braking mechanism 211 via the first sub-brake cable 2321 and to the second sub-braking mechanism 212 via the second sub-brake cable 2322. The main brake cable 232 may also connect to the brake lever 250. When a user manually presses the brake lever 250, it drives the main brake cable 232. Under the action of the brake lever 250, the main brake cable 232 can trigger the first sub-braking mechanism 211 and the second sub-braking mechanism 212 via the first sub-brake cable 2321 and the second sub-brake cable 2322, respectively, thereby restricting the rotation of the first wheel 1111 and the second wheel 1112.

In this way, a user can achieve synchronized braking of the two front wheels 1111 and 1112 by pressing the brake lever 250 with one hand. Synchronizing the braking of the first wheel 1111 and the second wheel 1112 helps improve the stability of the vehicle 001 during the braking process.

In some embodiments, the braking assembly 200 may include two brake levers 250, one on the left and one on the right. The left and right brake levers 250 can each be connected to a separate brake cable 231, enabling braking for the two front wheels 1111 and 1112, as well as one rear wheel 112. By splitting the brake cable 231, it is possible to achieve synchronized braking for more than two wheels.

In some embodiments, the brake cable 231 includes a mechanical splitter 234. The main brake cable 232 is connected to the first sub-brake cable 2321 and the second sub-brake cable 2322 through the mechanical splitter 234.

In addition to braking through brake cables, the vehicle 100 can also use hydraulic braking. Accordingly, in some embodiments, the transmission mechanism 230 includes a hydraulic pipe 241. When the user manually presses the brake lever 250, the braking force can be transmitted from the brake lever 250 to the braking mechanism 210 through hydraulic transmission. For example, the hydraulic pipe 241 contains brake fluid that flows to transmit the braking force. Consequently, the hydraulic pipe 241 functions as an oil pipe. In the vehicle 001, the deployment of the hydraulic pipe 241 can refer to the arrangement of the brake cable 231 as shown in FIG. 2, 3 and 5.

The number of hydraulic pipes 241 can be one or more. For example, in some embodiments, there is one hydraulic pipe 241. A single hydraulic pipe 241 connects to one sub-braking mechanism to restrict the rotation of one wheel. In another example, in some embodiments, there is one hydraulic pipe 241, which connects to two sub-braking mechanisms to restrict the rotation of two wheels. In yet another example, in some embodiments, there are two hydraulic pipes 241. One hydraulic pipe 241 connects to a single sub-braking mechanism to restrict the rotation of one wheel, while the other hydraulic pipe 241 connects to two sub-braking mechanisms to restrict the rotation of two wheels.

In some embodiments, the at least one hydraulic pipe 241 includes a main pipe, a first sub-pipe, and a second sub-pipe. The main pipe is operatively connected to the first sub-braking mechanism 211 via the first sub-pipe and to the second sub-braking mechanism 212 through the second sub-pipe. The main pipe may also connect to the brake lever 250. When a user manually presses the brake lever 250, it drives the hydraulic fluid within the main pipe. Under the action of the brake lever 250, the hydraulic fluid in the main pipe can activate the first sub-braking mechanism 211 and the second sub-braking mechanism 212 via the hydraulic fluid in the first sub-pipe and second sub-pipe, respectively, thereby restricting the rotation of the first wheel 1111 and the second wheel 1112.

This allows a user to achieve synchronized braking of the two front wheels 1111 and 1112 by pressing the brake lever 250 with one hand. Synchronizing the braking of the first wheel 1111 and the second wheel 1112 helps improve the stability of the vehicle 001 during the braking process.

In some embodiments, the braking assembly 200 may include two brake levers 250, one on the left and one on the right. These brake levers 250 can each be connected to a separate hydraulic pipe 241, enabling braking for the two front wheels 1111 and 1112, as well as the rear wheel 112. By employing a multi-end output configuration for the hydraulic pipes 241, synchronized braking for more than two wheels can be achieved.

In some embodiments, the hydraulic fluid in the main pipe is not connected to the hydraulic fluid in the first sub-pipe and second sub-pipe. In other embodiments, the hydraulic fluid in the main pipe is connected to the hydraulic fluid in the first sub-pipe and second sub-pipe.

As shown in FIG. 1 to 3, the vehicle 001 further includes a detection assembly 300. The detection assembly 300 is arranged on the main body 100 and is configured to change its state when the transmission mechanism 230 fails.

The failure modes of the transmission mechanism 230 may include breakage, disconnection, elongation, and similar issues. The specific form of failure depends on the structure of the transmission mechanism 230. For instance, when the transmission mechanism 230 includes a brake cable 231, disconnection or elongation of the brake cable 231 often leads to the failure of the transmission mechanism 230. Similarly, when the transmission mechanism 230 includes a hydraulic pipe 241, any damage to the sealed environment of the hydraulic fluid can result in the failure of the transmission mechanism 230. For example, damage or disconnection of the hydraulic pipe 241 may compromise the hydraulic fluid's sealed environment, causing the transmission mechanism 230 to fail.

Failure of the transmission mechanism 230 may lead to the failure or degradation of the braking function of the vehicle 001. When the transmission mechanism 230 fails, the detection assembly 300 can detect this failure, thereby enabling the situation to be promptly identified. This facilitates timely responses by the user or the vehicle 001 to take appropriate corrective actions.

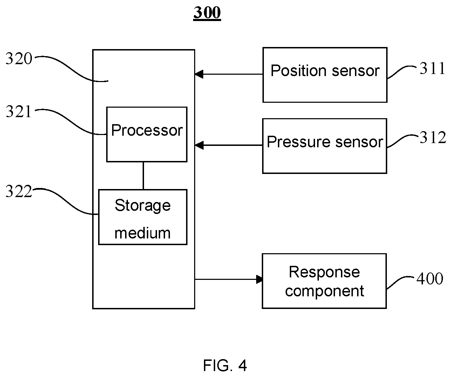

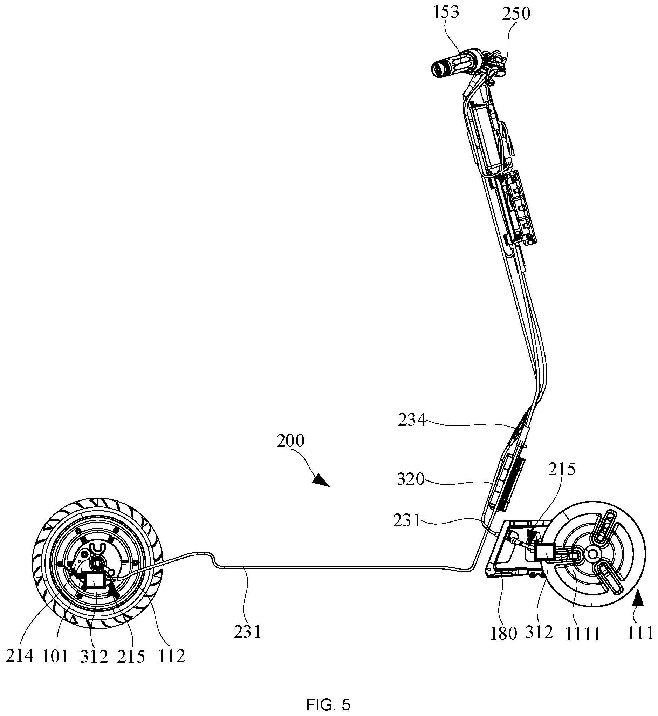

FIG. 4 shows a schematic block diagram of the circuit structure of the detection assembly according to some embodiments of the present application. FIG. 5 shows a partial side view of the vehicle according to some embodiments of the present application. In some embodiments, as shown in FIG. 4 and 5, the detection assembly 300 includes a controller 320. The controller 320 may include at least one storage medium 322 and at least one processor 321. The at least one storage medium 322 stores at least one set of instructions. The at least one processor 321 is in communication with the at least one storage medium 322.

The storage medium 322 may include one or more of a disk, read-only memory, or random access memory. The storage medium 322 may also include non-volatile random access memory.

The processor 321 may be in the form of one or more processors. According to some embodiments of this specification, the processor 321 may include one or more hardware processors, such as a microcontroller, microprocessor, reduced instruction set computer (RISC), application-specific integrated circuit (ASIC), application-specific instruction set processor (ASIP), central processing unit (CPU), microprocessor unit (MCU), graphics processing unit (GPU), physical processing unit (PPU), microcontroller unit, digital signal processor (DSP), field-programmable gate array (FPGA), advanced RISC machine (ARM), programmable logic device (PLD), or any circuit or processor capable of performing one or more functions, or any combination thereof.

For the sake of illustration, only one processor 321 is described in the controller 320 in this disclosure. However, it should be noted that the controller 320 can also include multiple processors 321. Therefore, the operations and/or method steps disclosed in this disclosure may be performed by one processor 321 as described, or may be jointly executed by multiple processors 321. For example, if the processor 321 of the controller 320 in this disclosure performs step A and step B, it should be understood that steps A and B can also be executed jointly or separately by two different processors 321 (e.g., the first processor 321 performing step A, the second processor 321 performing step B, or both the first and second processors 321 performing steps A and B together).

As shown in FIG. 1 and 4, the vehicle 001 also includes a response component 400. The response component 400 is arranged on the main body 100 and electrically connected to the controller 320. The controller 320 is configured to, when the detection assembly 300 undergoes a state change, control the response component 400 to issue a warning message and/or perform a response action. In other words, when the detection assembly 300 detects a failure in the transmission mechanism 230, the controller 320 controls the response component 400 to issue a warning message and/or take a responsive action.

In some embodiments, the response component 400 includes at least one of a warning light, a display, a transmission antenna, or a horn. These components (the warning light, display, transmission antenna, or horn) can provide a warning message to the user.

In some embodiments, the response component 400 includes a drive motor, which is used to drive the movement of vehicle 001. When the detection assembly 300 detects a failure in the transmission mechanism 230, and if the vehicle 001 is in a parked state at that time, the controller 320 controls the drive motor to prevent it from starting or locks the drive wheels.

In some embodiments, as shown in FIG. 3, the detection assembly 300 includes a wire 301 that measures the electrical conductivity status of the wire 301 during operation. The wire 301 is configured to be adjacent to the transmission mechanism 230 and extends along the direction of extension of the transmission mechanism 230. When the transmission mechanism 230 fails due to a break, the wire 301 also breaks, allowing the detection assembly 300 to detect the failure of the transmission mechanism 230 by the change in the electrical conductivity status of the wire 301.

Specifically, for a transmission mechanism 230 that includes a brake cable 231, the wire 301 may be fixed to the brake cable 231 and extend along the direction of the brake cable 231. For a transmission mechanism 230 that includes a hydraulic pipe 241, the wire 301 may be fixed to the hydraulic pipe 241 and extend along the direction of the brake cable 231. If the brake cable 231 or hydraulic pipe 241 breaks, the wire 301 will also break. When the wire 301 is intact, current flows through the wire 301. If the wire 301 is broken, the disconnected section of the wire 301 will have no current passing through it. The wire 301 is connected to the controller 320. In this way, the detection assembly 300 can determine whether the transmission mechanism 230 has failed by monitoring the electrical conductivity status of the wire 301.

In some embodiments, parts of the brake cable 231 or hydraulic pipe 241 may be partially exposed to the outside, creating a risk that these exposed sections could be cut. The wire 301 may be fixed to the exposed part of the brake cable 231 or hydraulic pipe 241. This approach can reduce the material usage for the wire 301 and simplify its layout.

In some embodiments, as shown in FIG. 3, the wire 301 includes a main wire 302, a first sub-wire 3021, and a second sub-wire 3022. The main wire 302 is connected to the first sub-wire 3021 and the second sub-wire 3022. When one or both of the first sub-wire 3021 and the second sub-wire 3022 break, the electrical conductivity status of the main wire 302 changes. The main wire 302 is connected to the controller 320. By branching the wire 301, the number of connection points between the wire 301 and the controller 320 can be reduced, which makes it easier to connect the controller 320 with other circuits and simplifies the layout of the wire 301.

In some embodiments, the resistance of the first sub-wire 3021 and the second sub-wire 3022 may differ. The change in the electrical conductivity status of the main wire 302 caused by the breakage of the first sub-wire 3021 may differ from that caused by the breakage of the second sub-wire 3022.

In some embodiments, the wire 301 includes a circuit splitter 303, with the main wire 302 being connected to the first sub-wire 3021 and the second sub-wire 3022 through the circuit splitter 303.

As shown in FIG. 3, the first sub-wire 3021 is adjacent to the first sub-brake cable 2321 and extends along the direction of extension of the first sub-brake cable 2321. The second sub-wire 3022 is adjacent to the second sub-brake cable 2322 and extends along the direction of extension of the second sub-brake cable 2322. Furthermore, the first sub-wire 3021 may be fixed to the first sub-brake cable 2321, and the second sub-wire 3022 may be fixed to the second sub-brake cable 2322.

When the first sub-brake cable 2321 fails due to a break, the first sub-wire 3021 will also break. Similarly, when the second sub-brake cable 2322 fails due to a break, the second sub-wire 3022 will also break. In this way, the detection assembly 300 can determine whether the first and second sub-brake cables 2321 and 2322 have failed by monitoring the electrical conductivity status of the main

In some embodiments, the wire 301 includes a third sub-wire 301, which is connected to the main wire 302. The third sub-wire 301 can be configured to detect whether certain parts of the transmission mechanism 230, other than the first sub-brake line 2321 and the second sub-brake line 2322, are broken.

In some embodiments, the first sub-wire 3021 is adjacent to the first sub-pipe and extends along the direction of extension of the first sub-pipe. The second sub-wire 3022 is adjacent to the second sub-pipe and extends along the direction of extension of the second sub-pipe. Furthermore, the first sub-wire 3021 may be fixed to the first sub-pipe, and the second sub-wire 3022 may be fixed to the second sub-pipe.

When the first sub-pipe fails due to a break, the first sub-wire 3021 will also break. Similarly, when the second sub-pipe fails due to a break, the second sub-wire 3022 will also break. In this way, the detection assembly 300 can determine whether the first and second sub-pipes have failed by monitoring the electrical conductivity status of the main wire 302.

In some embodiments, the wire 301 includes a third sub-wire 301, which is connected to the main wire 302. The third sub-wire 301 can be configured to detect whether certain parts of the transmission mechanism 230, other than the first sub-pipe and second sub-pipe, are broken.

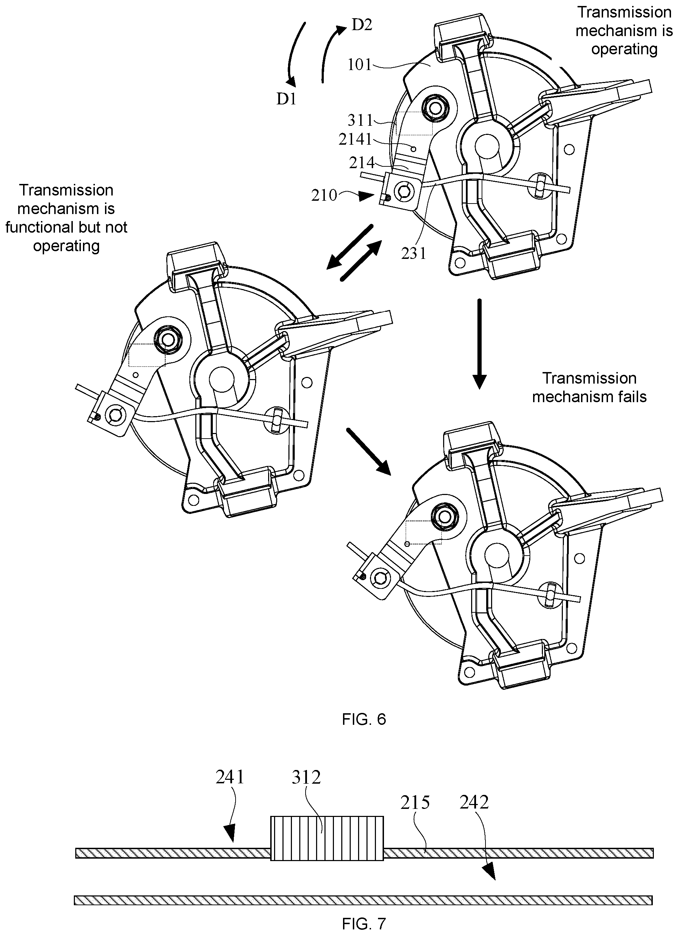

FIG. 6 shows the position change of the movable part of the brake assembly when the transmission mechanism status changes, according to some embodiments of this application. In FIG. 6, from top to bottom, the transmission mechanism states are: working state, valid but not working state, and failure state. In some embodiments, as shown in FIG. 2 and FIG. 6, the brake assembly 200 includes a movable part 214, which is connected to the transmission mechanism 230 and undergoes a position change when the transmission mechanism 230 fails. The detection assembly 300 includes a position sensor 311, which is configured to detect the position change of the movable part 214.

The movable part 214 can be arranged in the transmission mechanism 230. For example, the movable part 214 can be located on the brake cable 231. The movable part 214 can also be positioned within the brake mechanism 210, indirectly connected to the transmission mechanism 230 through the brake mechanism 210. For instance, the movable part 214 can be the rocker arm of a drum brake structure.

When the transmission mechanism 230 is not failed, both the transmission mechanism 230 and the brake mechanism 210 are in a tensioned state, meaning both the transmission mechanism 230 and the brake mechanism 210 are under tension. When the transmission mechanism 230 fails, the tension in both the transmission mechanism 230 and the brake mechanism 210 disappears, and they may enter a relaxed state. The transition of the transmission mechanism 230 and the brake mechanism 210 from a tensioned state to a relaxed state causes the movable part 214 to change its position. The position sensor 311 can be connected to the controller 320. Therefore, the controller 320 can detect the position change of the movable part 214 through the position sensor 311, and thus determine whether the transmission mechanism 230 has failed.

In some embodiments, the position sensor 311 includes a magnetostrictive position sensor 311, an optical position sensor 311, or a Hall effect-based magnetic position sensor 311.

In some embodiments, as shown in FIG. 5 and 6, the main body 100 includes a base 101. The movable part 214 is movably connected to the base 101. Further, the movable part 214 is rotationally connected to the base 101.

The transmission mechanism 230 includes a brake cable 231 or hydraulic pipe 241. The movable part 214 is connected to the brake cable 231 or hydraulic pipe 241 and can move relative to the base 101 under the force exerted by the liquid in the brake cable 231 or hydraulic pipe 241. The position sensor 311 is arranged on the base 101 and is configured to detect the position change of the movable part 214 relative to the base 101.

Furthermore, the base 101 is used to mount the movable part 214 and the position sensor 311. When the transmission mechanism 230 drives the brake mechanism 210 to perform braking work, the movable part 214 may move in the first direction D1. When the transmission mechanism 230 fails, the movable part 214 may move in the second direction D2 to a preset position. The second direction D2 is opposite to the first direction D1. The position sensor 311 is configured to detect whether the movable part 214 is at the preset position. When the position sensor 311 detects that the movable part 214 is at the preset position, it sends a detection signal to the controller 320.

In some embodiments, the movable part 214 has a flag hole 2141, and the position sensor 311 determines whether the movable part 214 is at the preset position by detecting the position of the flag hole 2141.

In some embodiments, the base 101 is located at the hub and can be used to mount the drum brake mechanism.

FIG. 7 shows a schematic diagram of the hydraulic pressure inside the hydraulic pipe measured by the pressure sensor according to some embodiments of the present application. In some embodiments, as shown in FIG. 2, 5 and 7, the brake assembly 200 includes a load part 215, which is connected to the transmission mechanism 230. When the transmission mechanism 230 fails, the load part 215 may undergo a load change. The detection assembly 300 includes a pressure sensor 312, which is configured to detect the load change of the load part 215.

When the transmission mechanism 230 fails, the transmission mechanism 230 and the braking mechanism 210 switch from a tense state to a relaxed state, causing a change in the tension inside the transmission mechanism 230 and the braking mechanism 210. That is, the transmission mechanism 230 and the braking mechanism 210 may have a load part 215, and when the transmission mechanism 230 fails, the load part 215 experiences a load change. The pressure sensor 312 is configured to detect the load change of the load part 215. In other words, the pressure sensor 312 is capable of detecting changes in the tension inside the transmission mechanism 230 and the braking mechanism 210. The pressure sensor 312 can be connected to the controller 320. The controller 320 can determine whether the transmission mechanism 230 has failed based on the detection signal from the pressure sensor 312.

In some embodiments, as shown in FIG. 2 and 5, the transmission mechanism 230 includes the brake cable 231, where the load part 215 is located within the brake cable 231. The pressure sensor 312 is connected to the brake cable 231. When the brake cable 231 is disconnected or stretched, it causes the transmission mechanism 230 to fail, while the tension inside the brake cable 231 decreases or becomes zero. The pressure sensor 312 can determine the tension change inside the brake cable 231 by detecting the load change of the load part 215, thereby determining whether the transmission mechanism 230 has failed.

In some embodiments, the load part 215 is located at one end of the brake cable 231 near the brake lever 250, and the pressure sensor 312 can be arranged on the brake lever 250.

In some embodiments, the load part 215 is located at one end of the brake cable 231 near the braking mechanism 210, and the pressure sensor 312 can be arranged at the hub.

In some embodiments, as shown in FIG. 2, 5 and 6, the transmission mechanism 230 includes the brake cable 231. The braking mechanism 210 includes a movable part 214, which is connected to the brake cable 231 and moves relative to at least one wheel when driven by the brake cable 231, thereby limiting the rotation of at least one wheel. For example, the movable part 214 could be a rocker arm or a brake shoe of a drum brake structure.

The load part 215 is located on the movable part 214, and the pressure sensor 312 is connected to the movable part 214. When the transmission mechanism 230 drives the braking mechanism 210 to perform braking, the movable part 214 can move in the first direction D1, causing the load of the load part 215 to increase. When the transmission mechanism 230 fails, the movable part 214 can move in the second direction D2, causing the load of the load part 215 to decrease or become zero. The second direction D2 is opposite to the first direction D1. The pressure sensor 312 can determine the tension change inside the braking mechanism 210 by detecting the load change of the load part 215, thereby determining whether the transmission mechanism 230 has failed.

In some embodiments, the transmission mechanism 230 is a hydraulic transmission structure. As shown in FIG. 7, the hydraulic transmission structure forms a containment space 242 for holding fluid. The load part 215 is located on the surrounding wall of the containment space 242, and the pressure sensor 312 is configured to detect changes in the load applied by the fluid inside the containment space 242 to the surrounding wall of the containment space 242. That is, the pressure sensor 312 is configured to detect the hydraulic pressure of the hydraulic fluid. For example, the transmission mechanism 230 includes a hydraulic pipe 241, with the containment space 242 located inside the hydraulic pipe 241, and the load part 215 being the pipe wall of the hydraulic pipe 241.

The prerequisite for hydraulic transmission is the effective sealing of the hydraulic fluid. Damage to or disconnection of the hydraulic pipe 241 would compromise the sealed environment of the hydraulic fluid, leading to a decrease in the hydraulic pressure of the fluid and the failure of the transmission mechanism 230. The pressure sensor 312 can determine changes in the sealed environment of the hydraulic fluid by detecting its hydraulic pressure, thus determining whether the transmission mechanism 230 has failed.

In some embodiments, the probe of the pressure sensor 312 is located inside the hydraulic pipe 241. Alternatively, the probe of the pressure sensor 312 may be located inside the hydraulic cylinder of the hydraulic transmission structure.

In summary, the vehicle 001 provided in this specification can detect the failure of the transmission mechanism 230 by the detection assembly 300 when the transmission mechanism 230 fails. This allows the failure of the transmission mechanism 230 to be identified in a timely manner, enabling a user or the vehicle 001 to take proactive measures in response.

The specific embodiments of the present application have been described above. Other embodiments are within the scope of the appended claims. In some cases, the actions or steps described in the claims may be performed in a different order than that in the embodiments and still achieve the desired result. Additionally, the processes depicted in the drawings do not necessarily require a specific or sequential order to achieve the desired outcome. In certain embodiments, multitasking and parallel processing may also be possible or advantageous.

In summary, after reading the detailed disclosure, a person skilled in the art will understand that the foregoing detailed disclosure has been presented by way of example only and is not intended to be restrictive. Although not explicitly stated here, a person skilled in the art will recognize that the application is intended to encompass various reasonable changes, improvements, and modifications to the embodiments. These changes, improvements, and modifications are intended to be covered by the present application and fall within the spirit and scope of the embodiments of the application.

Furthermore, certain terms in this application have been used to describe the embodiments of the present application. For example, the terms "one embodiment," "embodiment," and/or "some embodiments" mean that a particular feature, structure, or characteristic described in connection with that embodiment may be included in at least one embodiment of the present application. Therefore, it should be emphasized and understood that references to "embodiment," "one embodiment," or "alternative embodiment" in various parts of this application do not necessarily refer to the same embodiment. Additionally, specific features, structures, or characteristics may be appropriately combined in one or more embodiments of the present application.

It should be understood that in the preceding descriptions of the embodiments of this application, various features have been combined into a single embodiment, figure, or description for the purpose of simplifying and aiding understanding of a feature. However, this does not mean that these combinations of features are mandatory. A person skilled in the art, when reading this application, may fully understand that part of the equipment can be considered as a separate embodiment. In other words, the embodiments in this application can also be understood as an integration of multiple secondary embodiments. Each secondary embodiment is valid even when it contains fewer features than those of a single previously disclosed embodiment.

Each patent, patent application, publication of a patent application, and other materials, such as articles, books, specifications, publications, documents, articles, etc., cited herein, except for any historical prosecution documents to which it relates, which may be inconsistent with or any identities that conflict, or any identities that may have a restrictive effect on the broadest scope of the claims, are hereby incorporated by reference for all purposes now or hereafter associated with this document. Furthermore, in the event of any inconsistency or conflict between the description, definition, and/or use of a term associated with any contained material, the term used in this document shall prevail.

Finally, it should be understood that the embodiments disclosed in this application are descriptions of the principles of the embodiments of the present application. Other modified embodiments are also within the scope of this application. Therefore, the embodiments disclosed in this application are provided as examples and not as limitations. A person skilled in the art may adopt alternative configurations based on the embodiments in this application to implement the application. As such, the embodiments of this application are not limited to those explicitly described in the application.

## Claims

1. A vehicle, **characterized by** comprising:
a main body, provided with at least one wheel;
a braking assembly, disposed on the main body, including:
a braking mechanism configured to restrict a rotation of the at least one wheel,
a transmission mechanism, and
a brake lever, connected to the braking mechanism via the transmission mechanism, so as to drive the braking mechanism via the transmission mechanism, thereby causing the braking mechanism to restrict the rotation of the at least one wheel; and
a detection assembly, disposed on the main body, configured to undergo a state change when the transmission mechanism fails.

2. The vehicle according to claim 1, **characterized in that** the transmission mechanism includes at least one of a brake cable or a hydraulic pipe;
the detection assembly includes a wire and is configured to measure a conductive state of the wire during operation, wherein
the wire is arranged adjacent to the transmission mechanism and extends along an extension direction of the transmission mechanism,
when the transmission mechanism fails due to a breakage, the wire also breaks, causing the detection assembly to detect the failure of the transmission mechanism based on a change in the conductive state of the wire.

3. The vehicle according to claim 2, **characterized in that**
the at least one wheel includes a first wheel and a second wheel;
the braking mechanism includes a first sub-braking mechanism and a second sub-braking mechanism, wherein the first sub-braking mechanism is configured to restrict a rotation of the first wheel, and the second sub-braking mechanism is configured to restrict a rotation of the second wheel;
the brake cable includes a main brake cable, a first sub-brake cable, and a second sub-brake cable;
the main brake cable is drivingly connected to the first sub-braking mechanism via the first sub-brake cable, and connected to the second sub-braking mechanism via the second sub-brake cable;
the wire includes a main wire, a first sub-wire, and a second sub-wire; the main wire is connected to the first sub-wire and the second sub-wire, respectively; the first sub-wire is positioned adjacent to the first sub-brake cable and extends along an extension direction of the first sub-brake cable; and the second sub-wire is positioned adjacent to the second sub-brake cable and extends along an extension direction of the second sub-brake cable.

4. The vehicle according to claim 2, **characterized in that**
the at least one wheel includes a first wheel and a second wheel;
the braking mechanism includes a first sub-braking mechanism and a second sub-braking mechanism, wherein the first sub-braking mechanism is configured to restrict a rotation of the first wheel, and the second sub-braking mechanism is configured to restrict a rotation of the second wheel;
the hydraulic pipe includes a main pipe, a first sub-pipe, and a second sub-pipe; the main pipe is drivingly connected to the first sub-braking mechanism via the first sub-pipe, and the main pipe is drivingly connected to the second sub-braking mechanism via the second sub-pipe;
the wire includes a main wire, a first sub-wire, and a second sub-wire; the main wire is connected to the first sub-wire and the second sub-wire, respectively; the first sub-wire is positioned adjacent to the first sub-pipe and extends along an extension direction of the first sub-pipe; and the second sub-wire is positioned adjacent to the second sub-pipe and extends along an extension direction of the second sub-pipe.

5. The vehicle according to claim 3 or 4, **characterized in that**
the first wheel and the second wheel are both front wheels; or the first wheel and the second wheel are both rear wheels.

6. The vehicle according to claim 1, **characterized in that**
the braking assembly includes a movable part, which is connected to the transmission mechanism and undergoes a positional change when the transmission mechanism fails; and
the detection assembly includes a position sensor, which is configured to detect the positional change of the movable part.

7. The vehicle according to claim 6, **characterized in that**
the main body includes a base;
the movable part is movably connected to the base;
the transmission mechanism includes: a brake cable or a hydraulic pipe, wherein the movable part is connected to the brake cable or the hydraulic pipe, and is capable of moving relative to the base as driven by a fluid in the brake cable or the hydraulic pipe.

8. The vehicle according to claim 7, **characterized in that**
the movable part comprises a flag hole, and the position sensor is configured to detect a position of the flag hole.

9. The vehicle according to claim 7, **characterized in that**
the movable part is rotatably connected to the base.

10. The vehicle according to claim 7, **characterized in that**
when the transmission mechanism drives the braking mechanism to perform braking, the movable part moves along a first direction; when the transmission mechanism fails, the movable part moves along a second direction, wherein the second direction is opposite to the first direction.

11. The vehicle according to claim 1, **characterized in that**
the braking assembly includes: a load part, connected to the transmission mechanism, wherein the load part undergoes a load change when the transmission mechanism fails; and
the detection assembly includes: a pressure sensor, configured to detect the load change of the load part.

12. The vehicle according to claim 11, **characterized in that**
the transmission mechanism includes a brake cable, wherein
the load part is located on the brake cable, and
the pressure sensor is connected to the load part.

13. The vehicle according to claim 11, **characterized in that**
the transmission mechanism includes a brake cable;
the braking mechanism includes a movable part, which is connected to the brake cable and moves relative to the at least one wheel as driven by the brake cable, thereby restricting the rotation of the at least one wheel; the load part is located on the movable part, and the pressure sensor is connected to the movable part.

14. The vehicle according to claim 11, **characterized in that**
the transmission mechanism is a hydraulic transmission structure, and the hydraulic transmission structure forms a receiving space for containing a fluid; the load part is located on a surrounding wall of the receiving space, and the pressure sensor is configured to detect a change in a load applied by the fluid inside the receiving space to the surrounding wall of the receiving space.

15. The vehicle according to any one of claims 1 to 14, **characterized in that** the detection assembly includes a controller; and the vehicle further comprises:
a response component, disposed on the main body and electrically connected to the controller; wherein
the controller is configured to: when the detection assembly undergoes a state change, control the response component to issue a prompt message and/or perform a responsive action.
